# EUROPEAN PATENT APPLICATION

(11) **EP 3 412 906 A1**
(43) Date of publication of application: **12.12.2018**
(21) Application number: 17174914.6
(22) Date of filing: 08.06.2017
(51) Int. Cl.: F03D 1/06

(54) **A WIND TURBINE ROTOR BLADE, A SECTION THEREOF AND AN INTERCONNECTING MEMBER**

(71) Applicant: Winfoor AB, 227 64 Lund (SE)
(72) Inventor: BERTHILSSON, Rikard, 244 60 LUND (SE)
(74) Representative: AWA Sweden AB

(57) **Abstract**

The disclosure relates to a section of a wind turbine rotor blade, the section comprising: three or more wing members extending along each other, at a distance from each other, and along a longitudinal direction of the wind turbine rotor blade, wherein at least one, and preferably each, wing member has an airfoil shaped cross-section as seen in a plane transverse to the longitudinal extension of the wing member, wherein each wing member extends from a respective inner end to a respective outer end, wherein the section further comprises a first plurality of three or more struts and a second plurality of three or more struts, wherein the struts in the first plurality of struts each extend from an inner end of one wing member to an inner end of another wing member, such that the struts in the first plurality of struts interconnect the wing members at their inner ends, and wherein the struts in the second plurality of struts each extend from an outer end of one wing member to an outer end of another wing member, such that the struts in the second plurality of struts interconnect the wing members at their outer ends. The disclosure also relates to a wind turbine rotor blade and to an interconnecting member.

## Description

### Field of invention

The invention relates to a section of a wind turbine rotor blade. The invention also relates to a wind turbine rotor blade. The invention also relates to an interconnecting member.

### Technical Background

There is a growing interest in renewable energy technologies throughout the world. For instance, climate change concerns are driving energy production to renewable energy technologies. Wind power is therefore an important energy source and the amount of power produced annually through wind power is growing rapidly.

Wind power is the conversion of wind energy into more useful forms, such as electricity. In this regard, use is made of a wind turbine, which is a device that converts kinetic energy from the wind into electrical power. A wind turbine comprises a rotor having a central hub, to which one or more blades are attached. The rotor is arranged to rotate as the blades are subject to a mass of air passing the wind turbine due to a blowing wind. The rotation of the rotor thus generates mechanical energy that may be converted to electrical power in the wind turbine.

There are two main types of wind turbines, horizontal-axis wind turbines (HAWT), wherein the blades rotate about a horizontal axis, and vertical-axis wind turbines (VAWT), wherein the blades rotate about a vertical axis. The far most common type of wind turbine for large-scale power production is the HAWT and the discussion below is mainly directed to HAWTs.

The blades are formed with an airfoil-shaped cross-section. This implies that the blades are formed such that the surface at the leading side in the rotational direction of the blade causes the air passing the surface to take a longer path than the air passing the surface at the trailing side. Hence, the air passing over the surface at the leading side will travel faster than the air passing over the surface at the trailing side. Therefore, a difference in pressure is formed, resulting in a lift force on the blade. This lift force induces a torque about a rotor axis which causes the rotor to rotate.

The relative flow velocity, including speed and direction, between a moving blade and the air is called the apparent flow velocity. As air passes the surface of an airfoil shaped blade it exerts a force on it that depends on the apparent flow velocity and the shape of the airfoil. Lift force is the component of the force that is perpendicular to the oncoming apparent flow direction. It contrasts with the drag force, which is the component of the force parallel to the apparent flow direction. Contrary to the lift force, the drag force tends to counteract the movement of the blade and it can be shown through mathematical analysis that in order to optimize the power efficiency of the turbine the blade should be designed so as to maximize the ratio between the lift force and the drag force.

The power production capacity of a wind turbine is mainly affected by the length of the blades. The power generated by a wind turbine is proportional to the area swept by the blades, which is typically proportional to the square of the length of the blades. Hence, an increased length of the blades enables an increased power production of the wind turbine.

However, the blades also need to be designed with the loads encountered by the blades during operation of the wind turbine in mind. Aerodynamic loads are formed by means of the wind and the rotation of the blade in the air giving rise to the apparent flow. The aerodynamic loads cause a bending moment on the blade, which is largest closest to the hub. While the aerodynamic loads may vary due to wind turbulence, the aerodynamic loads exerted on the blades are typically proportional to the square of the length of the blades.

The blades are also exerted to gravity loads due to the mass of the blade, and as the blade rotates a full circle the blade will go through a fatigue cycle. The gravity loads are typically proportional to the cube of the length of the blade. Therefore, although the aerodynamic loads are dominating for small-size blades, the gravity loads will become dominating as the length of the blades increases.

Thus, as the length of the blades is increased in order to increase the power production capacity of wind turbines, the blades need to be designed with a close attention to gravity loads exerted on the blades. Otherwise, there is a risk of fatigue failure due to the large mass of the blade. Furthermore, long blade will lead to problems concerning deformations, cracks and torsions of the blades. Hence, design of the blade becomes difficult as the length of the blade increases.

The mass of the blade and the associate gravity loads, as well as the aerodynamic loads, may force the design of the shape of the blade to be a compromise between strength and aerodynamics. In particular close to the hub, the blade may need to have a design which is optimized for providing strength rather than airfoil characteristics, which implies that the aerodynamic properties of the blade will not be optimal.

Further, when the wind turbine is to be installed, the wind turbine parts need to be transported to the site of the wind turbine. The wind turbine consists of very large parts, such as the long blades, which makes transportation of the parts to the site a difficult task. For instance, the wind turbine parts may be much longer than the usually allowed length of vehicles, which implies that special vehicles need to be used for transportation of the parts on land. Further, the mass of the wind turbine parts may also set special requirements in order to allow transportation of the parts to the site. Also, installation of the parts on the site is cumbersome due to the mass and length of the parts.

Also, the cost of the blade of course increases with the mass of the blade. Since the mass of the blade is proportional to the cube of the length of the blade, the costs of manufacturing a blade increases more rapidly with the length of the blade than the power production capacity of the wind turbine.

Finally, a large mass of the blade may cause problems with tower and foundation of the wind turbine, as large loads are exerted on these parts of the wind turbine by the mass of the blade. Also, the increased mass of the blade causes increased loads on the rotor hub by means of the increased rotational inertia.

It is clear from the above that any modification of blades of wind turbines, such that the mass of the blades is decreased would significantly improve problems faced in design of the blades.

In US 7,517,198, a lightweight wind turbine blade is disclosed. The turbine blade comprises a lightweight composite support truss structure. The support truss structure is covered by an assembly of skins forming the basic airfoil shape of the blade. A series of laterally spaced ribs form a spine of the blade and define the general airfoil shape. However, the blade needs to be thin in order to keep the aerodynamic loads down. This implies that it is difficult to obtain a strong structure. Therefore, the ribs closest to the hub have a circular shape providing strength to the structure rather than good aerodynamic properties.

In EP 1 887 219, a special blade structure is disclosed. The blade structure makes use of the fact that the moment of inertia of a blade can be increased by designing a profile section of the blade so as to increase the surface of the section and the distance of the section to a neutral line. Further, the stress that a material of a section in the structure supports is inversely dependent to the moment of inertia, whereby increasing the moment of inertia decreases the stress of the material. Hence, by means of dividing the blade into sub-blades and separating the sub-blades, the moment of inertia may be increased without increasing the weight of the material. However, to achieve the greater moment of inertia, the sub-blades need to be firmly joined. Therefore, links are spaced out along the length of the sub-blades. Although this structure allows the stress that a material of a section in the structure supports to be decreased, the weight of the blade is in principle not decreased. Hence, there may still be a need to decrease the weight of blades. Also, the sub-blades are exerted to bending moments, which implies that the sub-blades closest to the hub needs to be designed with regard to providing strength to the sub-blade rather than aerodynamic properties.

US 1,820,529 discloses a propeller blade provided with a plurality of aero-foils, that merge at an apex. Each aero-foil slopes outward towards a supporting end where it is rigidly fixed to a common blade axis. A plurality of shelves are positioned to be clamped between the plurality of aerofoils, substantially parallel to the blade axis. Also, an oblique tie structure is rigidly secured to cross-brace one aerofoil with respect to the others of a given blade along the length thereof.

### Summary of invention

It is an object of the invention to provide a design of a wind turbine rotor blade such that a stable light weight blade is accomplished.

These and other objects of the invention are at least partly met by the invention as defined in the independent claims. Preferred embodiments are set out in the dependent claims.

According to an aspect of the invention, there is provided a section of a wind turbine rotor blade, the section comprising
three or more wing members extending along each other, at a distance from each other, and along a longitudinal direction of the wind turbine rotor blade,
wherein at least one, and preferably each, wing member has an airfoil shaped cross-section as seen in a plane transverse to the longitudinal extension of the wing member,
wherein each wing member extends from a respective inner end to a respective outer end,
wherein the section further comprises a first plurality of three or more struts and a second plurality of three or more struts,
wherein the struts in the first plurality of struts each extend from an inner end of one wing member to an inner end of another wing member, such that the struts in the first plurality of struts interconnect the wing members at their inner ends, and
wherein the struts in the second plurality of struts each extend from an outer end of one wing member to an outer end of another wing member, such that the struts in the second plurality of struts interconnect the wing members at their outer ends.

By designing the wind turbine rotor blade with three or more wing members and by using struts extending between the respective wing members it is possible to reduce both production cost and transportation cost, while allowing rotor blades to be longer, stronger and lighter than what is possible today.

The struts may be provided as separate members. The wing members may be provided as separate members. Thereby production cost and transportation cost may be reduced. Smaller and less costly production methods may be used since the wings only forms a portion of the total length of the wings of the rotor blade. Moreover, since the rotor blade comprises three or more wings each wing and wing member may have a smaller cross-section than traditional single wing blades. This also contributes to allowing for more cost effective production and transportation. The use of a plurality of struts interconnecting the wing members at respective end also provides for cost effective production and transportation. With the design discussed above it is possible to choose the dimensions and especially the length of the wing members such that it is adapted for a chosen transportation system. It is e.g. possible to design the rotor blade such that the wing members fit into a standardised shipment container.

Moreover, by designing the wind turbine rotor blade section and the wind turbine rotor blade as a truss-like frame structure it is possible to achieve a rotor blade to be longer, stronger and lighter than what is possible today.

As used herein, a "truss-like frame" may be construed as a three-dimensional framework of members. The framework thus constitutes a three-dimensional structure that forms the overall shape of the blade. A truss is typically a structure that is formed by straight members that are connected at joints to form units of triangles. The members are furthermore typically free to rotate around the joints. In a truss, moments (torques) typically cannot be transferred within the truss and the members are therefore subjected to only axial forces (tensile and compressive forces). Within the context of this application, the "truss-like frame" should be construed as a structure comprising triangles for forming a strong structure, but not necessarily having joints that cannot transfer any moments. For instance, at least three members may be connected at a joint, but not all members need to be connected at exactly a single point. Rather, one or two of the members may be connected close to the joint, but not in an exact single position connecting all members at the joint. Further, in a three-dimensional truss, the triangles of the truss do not all lie in a single two-dimensional plane. Hence, the "the truss-like three-dimensional frame" should be construed as a "truss-like frame" comprising triangles that do not all lie in a single two-dimensional plane. In some cases, the "truss-like frame" may be formed from tetrahedron units.

It should in this context be noted that the term section is intended to refer to a section of a wind turbine rotor blade divided into sections. The term section is not intended to be understood as a complete building block which is repeated. It should e.g. be noted that it is preferred that in an interface between two sections there is only a shared set of a plurality of struts. Thus, at an interface between an outer end of a first section and an inner end of a second section, will the second plurality of struts of the first section also form or constitute the first plurality of struts of the second section. Thus, the first section shares the plurality of struts of with the second section at the interface or transition between the first and second sections. It may also be noted that the wings may but need not necessarily be divided into a separate wing member at every section interface. It is e.g. conceivable that the three or more wing members extend along the section closest to the hub and then three or more separate wing members extend along e.g. the second through to the fourth section. Other combinations are conceivable. The wing members of the inner most section may e.g. extend also along the second section and perhaps even farther, such as along the third section. It may also be noted that the number of sections used in the detailed description is merely an example of a preferred embodiment. The number of sections may be greater or fewer. When a wing member extends along more than one section, the respective wing member is, at one or more positions along the length thereof, corresponding to a respective section interface, provided with connections for struts such that a plurality of struts may be provided at respective section interface. This could alternatively also be considered to equate to the respective section having, apart from the first and second pluralities of struts, one or more other, intermediate, pluralities of struts.

The section may further comprise at least one diagonal frame member extending from an inner end of a first wing member to an outer end of another wing member. The provision of a diagonal frame member extending from an inner end of a first wing member to an outer end of another wing member provides the possibility to provide a pulling force holding together the different wing members, whereas the struts will keep the wing members at the intended distance from each other. The combination of struts and diagonal frame members provides together with the wing members a truss-like frame. It is an insight of the invention that a wind turbine rotor blade may be formed by a truss-like frame. Thanks to the truss-like frame, the truss members will generally only be exerted to tensile or compressive forces. This makes it possible to provide a straight-forward design of the truss members, such as the struts and the diagonal frame members, thereby avoiding complex designs and complicated and costly manufacturing. It is preferred that the diagonal frame members extend from an inner end of a first wing member to an outer end of another wing member of the same section. Thereby will the angle be as great as possible and thereby will the diagonal frame members have a great contribution to the structural stability. It may also be noted that it is not excluded that a diagonal frame member may as a complement or alternative be connected between an inner end of a first wing member to an outer end of a wing member of another section, i.e. extending past the outer end of the other wing member of the same section. This may also be expressed as the diagonal frame member extending along the length of two or more sections.

The diagonal frame member may be pre-tensioned providing a pulling force between the inner end of the first wing member to the outer end of the other wing member. Preferably the pre-tension is such that there will be a remaining pre-tension in all the diagonal frame members for any deformation up to the dimensioning loads. Thereby the truss-like frame will be securely held together for any load up to the dimensioning load.

The struts may be configured to resist longitudinal compression along a longitudinal direction of respective strut.

The longitudinal direction of respective strut is essentially extending for instance from the inner end of the first wing member to the inner end of another wing member or an outer end of a first wing member to the outer end of another wing member. In practice the actual connection points may be slightly offset the ends along the longitudinal direction of the rotor blade. This may e.g. be the case when using an interconnecting member interconnecting the wing members of one section with the corresponding wing member of an adjacent section. In such a case the interconnecting member may have connectors for the struts positioned between the outer end of an inner section and the inner end of an outer section. The longitudinal direction of the respective strut will in such a case be extending from the connector of one interconnecting member to a connector of another interconnecting member.

Each strut of the struts in the first plurality of struts may be separate elongated members being mechanically connected at a first end of the strut to a first end of a first wing member and being mechanically connected at a second end of the strut to a first end of another wing member.

Each strut of the struts in the second plurality of struts may be separate elongated members being mechanically connected at a first end of the strut to a second end of a first wing member and being mechanically connected at a second end of the strut to a second end of another wing member.

Providing the struts as separate elongate members being mechanically connected to the wing members further facilitates the production and transportation.

The number of struts in the first plurality of struts may be at least equal to, and preferably is equal to, the number of wing members.

The number of struts in the second plurality of struts may be at least equal to, and preferably is equal to, the number of wing members.

By providing a number of struts being at least equal to the number of wing members, it is possible to secure that every wing member is connected to at least two other wing members. It is conceivable to use for instance five or six struts in case there is four wing members. Four struts forming a foursided polygon and one or more struts extending diagonally inside the polygon. However, in the preferred embodiment there is three wing members and three struts in each of the first and second plurality of struts.

The struts in the first plurality of struts may form a closed polygon, preferably non-self-intersecting closed polygon, with the respective inner ends of the wing members positioned in the corners of the polygon.

The struts in the second plurality of struts may form a closed polygon, preferably non-self-intersecting closed polygon, with the respective outer ends of the wing members positioned in the corners of the polygon.

In the preferred embodiment there is three wing members and three struts in each of the first and second plurality of struts, wherein the struts forma a triangle with the wing members being positioned in the corners of the triangle. In one embodiment the triangle is an equilateral triangle.

The section may further comprise at, at least one end of the respective wing member, an interconnecting member by which the respective wing member is configured to be interconnected with a corresponding wing member of a second section, wherein each interconnecting member preferably is provided with connectors for at least two, preferably for two, struts each extending from the respective wing member to two other wing members. The provision of interconnecting members preinstalled in one end of the wing members may be used to facilitate mounting of the wind turbine rotor blade by reducing at least a step of connecting the interconnecting member to one of the wing members. It may also be beneficial since it provides guidance concerning the mounting of a number of the other components, such as the mounting of the struts which becomes well-defined by the preinstalled interconnecting member being provided with connectors for the struts. The pre-installation may of interconnecting member may also be used to reduce weight and facilitate production by allowing for the use of connection methods being difficult to accomplish or use on site where the wind turbine is to be erected. It is e.g. possible to make the connection between the wing member and interconnecting member almost as if they were an integral part if the wing member and interconnecting member are adhesively connected to each other during the production of the interconnecting member and wing member.

As was discussed in the context of the plurality of struts at an interface between two sections, it may be relevant to repeat also in the context of the interconnecting member, that the term section is intended to refer to a section of a wind turbine rotor blade divided into sections. The term section is not intended to be understood as a complete building block which is repeated. It should e.g. be noted that the interconnecting member may be a shared interconnecting member. It may also be noted that the wing members may extend over more than one section.

It may in this context be mentioned that the interconnecting member may be formed of one part or a plurality of parts. The plurality of parts may be preassembled during manufacture of the interconnecting member. The parts may alternatively be assembled on site where the wind turbine is to be erected. It is also conceivable that some of the parts of the interconnecting member are preassembled and that some of the parts are assembled on site.

According to an aspect of the invention, there is provided a wind turbine rotor blade comprising a plurality of sections, wherein each section comprises three or more wing members extending along each other, at a distance from each other, and along a longitudinal direction of the wind turbine rotor blade,
wherein at least one, and preferably each, wing member has an airfoil shaped cross-section as seen in a plane transverse to the longitudinal extension of the wing member,
wherein each wing member extends from a respective inner end to a respective outer end,
wherein the section further comprises a first plurality of three or more struts and a second plurality of three or more struts,
wherein the struts in the first plurality of struts each extend from an inner end of one wing member to an inner end of another wing member, such that the struts in the first plurality of struts interconnect the wing members at their inner ends, and
wherein the struts in the second plurality of struts each extend from an outer end of one wing member to an outer end of another wing member, such that the struts in the second plurality of struts interconnect the wing members at their outer ends,
wherein the sections are arranged with its respective wing members arranged one after another along the longitudinal direction of the wind turbine rotor blade, and
wherein the second plurality of struts of a first section also forms the first plurality of struts of a second section being immediately adjacent the first section as seen in the longitudinal direction of the wind turbine rotor blade.

This may also be said as providing a set of a plurality of struts at every transition from one section to another section. For instance, if the wind turbine rotor blade is formed of four sections arranged one after the other along the longitudinal direction of the wind turbine rotor blade there will be a first set of a plurality of struts in the transition between the first and second section, a second set of a plurality of struts in the transition between the second and third transition and a third set of a plurality of struts in the transition between the third and fourth section. It may be noted that at the connection between the inner most section closest to the hub and the hub it is conceivable to use a plurality of struts and it is also conceivable to use a truncated pyramid shaped member interconnecting the wing members at the end facing the hub and connecting the wind turbine rotor blade to the hub.

At the outer most end of the wind turbine rotor blade it is conceivable to use a plurality of struts and it is also conceivable to use another kind of member, such as a plate or the like, interconnecting the outer ends of the wing members. It may be advantageous to use a single member at the outer most end, the single member having internal rigidity in the plane formed by the ends of the wing members.

The wing members of the first section may be separate from the wing members of the second section. As mentioned above, this is useful since it is possible to design the wing members such that production and transportation is facilitated. However, as mentioned above, it may also be noted that the wings may but need not necessarily be divided into a separate wing member at every section interface. It is e.g. conceivable that the three or more wing members extend along the section closest to the hub and then three or more separate wing members extend along e.g. the second through to the fourth section. Other combinations are conceivable. The wing members of the inner most section may e.g. extend also along the second section and perhaps even farther, such as along the third section. It may also be noted that the number of sections used in the detailed description is merely an example of a preferred embodiment. The number of sections may be greater or fewer.

The wing members of the first section may have different airfoil properties than the wing members of the second section. In this context different airfoil properties may e.g. be different orientations providing different angles of attack, different cross-sectional shapes and/or different cross-sectional sizes. By providing different airfoil properties of the wing members of different sections, it is possible to provide different airfoil properties along the length of the wind turbine rotor blade. This is typically desirable e.g. to take into account that the wing members will have different speed relative to the air at different positions along the longitudinal direction of the rotor blade as the rotor blade rotates about the hub. It is e.g. possible to design the respective wing member with a constant cross-section along the complete length of the wing member and then have different cross-sections and/or different orientations of the respective wing member in the different sections. Alternatively, the cross-section may vary e.g. such that it becomes smaller the farther from the hub the wing member is. This change may be continuous along respective wing member or it may be constant over each wing member and then changed in a step to the wing member of the next section. The wing member may be straight with the same angle of attack along the complete length of the wing member. Alternatively, it may be a slightly curving wing member continuously changing the angle of attack. This continuous change may be continuous also over the transition between the wing members of two adjacent sections. The continuous change may alternatively be interrupted by a slightly greater change by a step in the angular orientation at the transition between the adjacent sections.

Respective wing member of the first section is interconnected with a corresponding wing member of the second section by an interconnecting member, wherein each interconnecting member is provided with connectors for at least two, preferably for two, struts each extending from the respective wing member to two other wing members.

Preferably two connectors since the wing members are preferably three and respective wing member is in this case typically connected to two other wing members with one strut to each such wing member. Those two wing members are in turn preferably interconnected with a third strut.

By using interconnecting members, it is possible to provide strong connectors capable of transmitting great forces over a small area. The interconnecting members may e.g. include at least one part formed of metal, such as steel, provided with connectors. The interconnecting members may also be provided with elongate portions extending along the longitudinal direction, the elongate portions being configured to interact with the wing members over a significant length along the longitudinal direction. This significant length preferably being at least half the distance between the wing members along the longitudinal direction of the struts.

It may in this context be mentioned that the interconnecting member may be formed of one part or a plurality of parts. The plurality of parts may be preassembled during manufacture of the interconnecting member. The parts may alternatively be assembled on site where the wind turbine is to be erected. It is also conceivable that some of the parts of the interconnecting member are preassembled and that some of the parts are assembled on site.

Furthermore, it is preferred that at least one of the interconnecting members at the inner end of a first wing member of a first section further comprises at least one connector for a pre-tensioned diagonal frame member and/or wherein at least one of the interconnecting members at the outer end of another wing member of the section further comprises at least one connector for the pre-tensioned diagonal frame member.

It may be noted that the diagonal frame member may be fixed or integrally connected to one of the interconnecting members. It is sufficient that there is a connector at one of the interconnecting members. It may also be noted that as an alternative or as a complement, the diagonal frame member may be divided into separate sections or parts along its length. A first end section or part may be fixed or integrally connected to a first interconnecting member and a second end section or part, at the opposite end, may be fixed or integrally connected to a second interconnecting member. One or more intermediate sections or parts of the diagonal frame member may then be used to interconnect the first and second end sections or parts such that a diagonal frame member extending from the first interconnecting member to the second interconnecting member is formed.

According to an aspect of the invention, there is provided an interconnecting members configured to interconnect a wing member of a first section with a corresponding wing member of a second section in a wind turbine rotor blade comprising three or more wing members extending along each other, at a distance from each other, and along a longitudinal direction of the wind turbine rotor blade, wherein the interconnecting member is provided with connectors for at least two, preferably for two, struts each configured to extend from the interconnecting member to another interconnecting member configured to interconnect another wing member of the first section with another corresponding wing member of the second section.

By providing interconnecting members, it is possible to provide strong connectors capable of transmitting great forces over a small area. The interconnecting members may e.g. include at least one part formed of metal, such as steel, provided with connectors. The interconnecting members may also be provided with elongate portions extending along the longitudinal direction, the elongate portions being configured to interact with the wing members over a significant length along the longitudinal direction. This significant length preferably being at least half the distance between the wing members along the longitudinal direction of the struts.

It may in this context be mentioned that the interconnecting member may be formed of one part or a plurality of parts. The plurality of parts may be preassembled during manufacture of the interconnecting member. The parts may alternatively be assembled on site where the wind turbine is to be erected. It is also conceivable that some of the parts of the interconnecting member are preassembled and that some of the parts are assembled on site.

The interconnecting member may further comprise:
at least one portion formed of metal provided with connectors, and
a first and a second elongate portion each extending along the longitudinal direction,
wherein the first elongate portion being configured to interact with the wing member of the first section and the second elongate portion being configured to interact with the corresponding wing member of the second section.

By providing one portion of metal and provide the connectors on this part, it is to an even greater extent possible to provide strong connectors capable of transmitting great forces over a small area. The elongate portions may be of metal. However, in a preferred embodiment, the elongate portions are formed of a composite material formed of fibres in a matrix, such as carbon or glass fibres in a hardened resin matrix.

The section, the wind turbine rotor blade and the interconnecting member are configured especially for use in a wind turbine as disclosed below. The wind turbine comprises a rotor having a central hub, to which one or more blades are attached. The rotor is arranged to rotate as the blades are subject to a mass of air passing the wind turbine due to a blowing wind. The rotation of the rotor thus generates mechanical energy that may be converted to electrical power in the wind turbine.

There are two main types of wind turbines, horizontal-axis wind turbines (HAWT), wherein the blades rotate about a horizontal axis, and vertical-axis wind turbines (VAWT), wherein the blades rotate about a vertical axis. The far most common type of wind turbine for large-scale power production is the HAWT and the invention is mainly directed to HAWTs. In the preferred embodiments, the wind turbine is a horizontal-axis wind turbines (HAWT).

Preferably all the wing members are formed with an airfoil-shaped cross-section. This implies that the wing members are formed such that the surface at the leading side in the rotational direction of the blade causes the air passing the surface to take a longer path than the air passing the surface at the trailing side. Hence, the air passing over the surface at the leading side will travel faster than the air passing over the surface at the trailing side. Therefore, a difference in pressure is formed, resulting in a lift force on the wing member. This lift force induces a torque about a rotor axis which causes the rotor to rotate.

The relative flow velocity, including speed and direction, between a moving blade or wing member and the air is called the apparent flow velocity. As air passes the surface of an airfoil shaped blade it exerts a force on it that depends on the apparent flow velocity and the shape of the airfoil. Lift force is the component of the force that is perpendicular to the oncoming apparent flow direction. It contrasts with the drag force, which is the component of the force parallel to the apparent flow direction. Contrary to the lift force, the drag force tends to counteract the movement of the blade and it can be shown through mathematical analysis that in order to optimize the power efficiency of the turbine the blade should be designed so as to maximize the ratio between the lift force and the drag force.

### Brief description of the drawings

The invention will by way of example be described in more detail with reference to the appended schematic drawings, which shows presently preferred embodiments of the invention.
Figure 1 shows a wind turbine.
Figure 2 shows a wind turbine rotor blade comprising three wings.
Figure 3 shows a section of the wind turbine rotor blade of figure 2.
Figure 4 shows in greater detail an interconnecting member shown in figure 3.
Figure 5 shows the interconnecting member of figure 4 with the wing member removed.
Figure 6 shows the interconnecting member of figures 4 and 5 in a different angle.
Figure 7 is a cross-section showing the interior of the interconnecting member of figure 6.
Figure 8 shows an interconnecting member according to another embodiment.
Figure 9 is a side view of the interconnecting member of figure 8.
Figure 10 is a cross-section showing the interior of the interconnecting member of figure 8 and 9.
Figure 11 is a detailed view of a central part of the interconnecting member of figures 8 to 10.
Figure 12 shows an interconnecting member according to another embodiment.
Figure 13 is a cross-section showing the interior of the interconnecting member of figure 12.

### Detailed description of preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

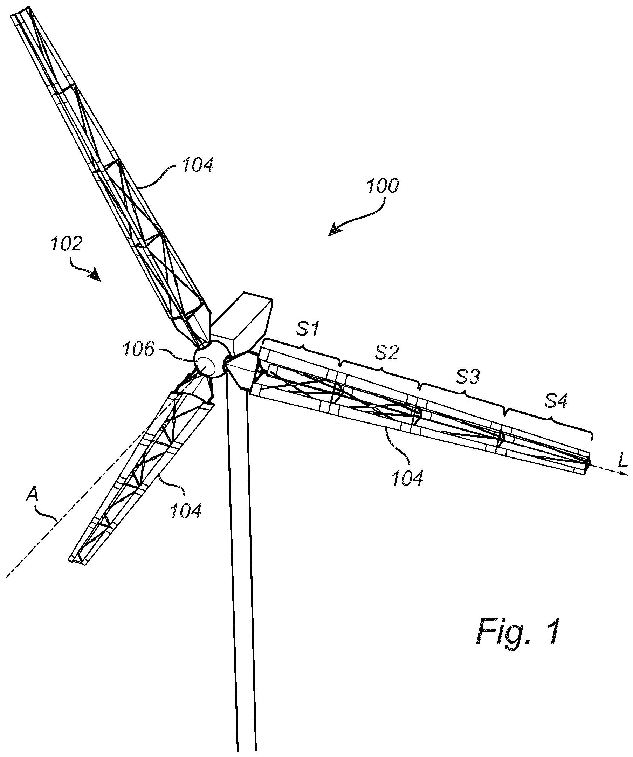

Figure 1 shows a wind turbine 100 comprising a rotor 102 having a central hub 106 to which truss-like wind turbine blades 104 are attached. The rotor 102 is arranged to rotate as the blades 104 are subject to a mass of air passing the wind turbine 100 due to a blowing wind. The rotation of the rotor 102 thus generates mechanical energy that may be converted to electrical power in the wind turbine 100. In the preferred embodiment, the rotor 102 comprises three rotor blades 104. However, it is conceivable to use a different number of rotor blades 104, such as two rotor blades. It is also conceivable to use a greater number of rotor blades 104 than the three shown in the preferred embodiment; it is e.g. conceivable to use four, five or six rotor blades. It is also conceivable to use a greater number of rotor blades 104 than that.

There are two main types of wind turbines, horizontal-axis wind turbines (HAWT), wherein the blades rotate about a horizontal axis A, and vertical-axis wind turbines (VAWT), wherein the blades rotate about a vertical axis. The far most common type of wind turbine for large-scale power production is the HAWT and the invention is mainly directed to HAWTs. In the embodiment shown in figure 1, the wind turbine is a horizontal-axis wind turbines (HAWT).

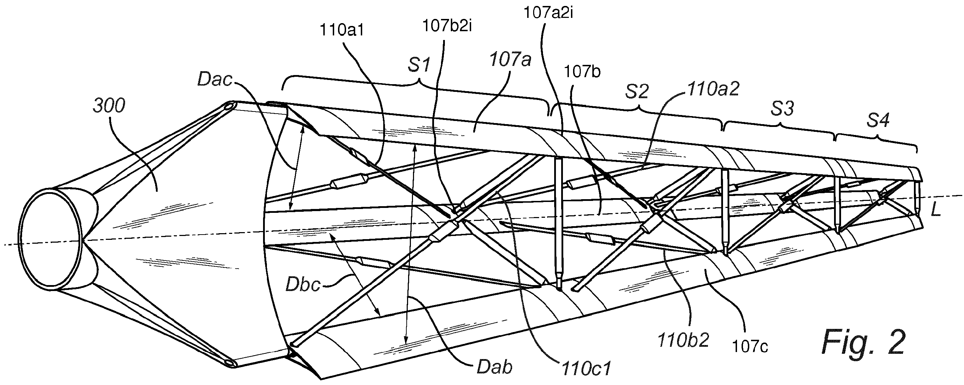

In figure 2, a wind turbine rotor blade 104 is disclosed in more detail. Each wind turbine rotor blade 104 comprises three wings 107a-c. The wings 107a-c extend along each other, at a distance Dac, Dab, and Dbd from each other. The wings 107a-c extend and along a longitudinal direction L of the wind turbine rotor blade 104.

In the preferred embodiment, the rotor blade 104 comprises three wings 107a-c. However, it is conceivable to use a greater number of wings 107a-c than the three shown in the preferred embodiment; it is e.g. conceivable to use four wings. It is also conceivable to use a greater number of wings 107a-c than that, such as e.g. five or six, or even greater than that.

As shown in figures 2, 3 and 4, each wing has an airfoil shaped cross-section as seen in a plane transverse to the longitudinal extension L of the respective wing 107a-c. This implies that the wings are formed such that the surface at the leading side in the rotational direction of the blade causes the air passing the surface to take a longer path than the air passing the surface at the trailing side. Hence, the air passing over the surface at the leading side will travel faster than the air passing over the surface at the trailing side. Therefore, a difference in pressure is formed, resulting in a lift force on the wing. This lift force induces a torque about a rotor axis which causes the rotor to rotate.

The relative flow velocity, including speed and direction, between a moving blade or wing and the air is called the apparent flow velocity. As air passes the surface of an airfoil shaped blade it exerts a force on it that depends on the apparent flow velocity and the shape of the airfoil. Lift force is the component of the force that is perpendicular to the oncoming apparent flow direction. It contrasts with the drag force, which is the component of the force parallel to the apparent flow direction. Contrary to the lift force, the drag force tends to counteract the movement of the blade and it can be shown through mathematical analysis that in order to optimize the power efficiency of the turbine the blade should be designed so as to maximize the ratio between the lift force and the drag force.

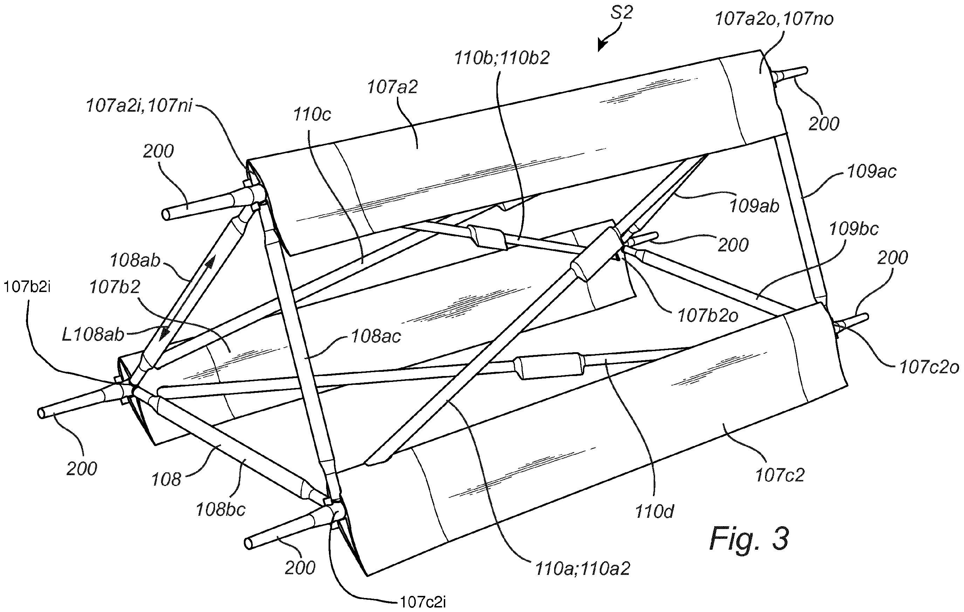

In figure 3, there is shown a section S2 of a wind turbine rotor blade 104. The wind turbine rotor blade 104 comprises a plurality of sections S1, S2, S3, S4. In this context it may be noted that the number of sections may be different than four. In figure 1, there is shown an example where there is four sections S1-S4 in each rotor blade 104. It is also conceivable to use a smaller number of sections, such as e.g. two or three sections. It is also conceivable to use a greater number of sections, such as e.g. five, six, seven, or eight sections. It is also conceivable to use a greater number of sections than that. It is preferred that the number of sections are the same in all rotor blades.

As shown in figure 3, the section S2 comprises three or more wing members 107a2, 107b2, 107c2 extending along each other. Any wing member forming part of the wing 107a will generally be denoted 107an unless there is a need to differentiate which section it is referred to. Likewise, will 107bn and 107cn be used as general reference for any wing member of wing 107b and 107c, respectively. In case there is no need to make a distinction between the wings 107a-c, we will use the notion 107 as a general notion. Thus, for any wing member of any wing we will use the notion 107n.

As mentioned above in relation to the wings 107, the wing members 107n extend at a distance from each other along a longitudinal direction L of the wind turbine rotor blade 104. Each wing member 107n has an airfoil shaped cross-section as seen in a plane transverse to the longitudinal extension L of the wing member 107n.

Each wing member extends from a respective inner end 107ni to a respective outer end 107no. In figure 3, the inner end 107a2i and the outer end 107a2o of the wing member 107a2 are indicated according to specific notion and according to general notion.

The section further comprises a first plurality of three struts 108ab, 108bc, 108ac each extending from an inner end 107ni of one wing member 107n to an inner end 107ni of another wing member 107n, such that the struts 108 in the first plurality of struts interconnect the wing members 107n at their inner ends 107ni. The struts 108ab, 108bc, 108ac will be denoted struts 108 when there is no need to differentiate between them.

The section further comprises a second plurality of three struts 109ab, 109bc, 109ac each extending from an outer end 107no of one wing member 107n to an outer end 107no of another wing member 107n, such that the struts 109 in the second plurality of struts interconnect the wing members 107n at their outer ends 107no. The struts 109ab, 109bc, 109ac will be denoted struts 109 when there is no need to differentiate between them.

As shown in figure 3, the struts 109 may have an aero dynamical cross-sectional shape. The shape may be designed to minimize any wind resistance. The shape may be designed as an airfoil.

In the preferred embodiment the struts 108, 109 are provided as separate members. In the preferred embodiment, the wing members 107n are provided as separate members. In the preferred embodiment, the wings 107a, 107b, 107c are along their respective length divided into discrete wing members 107n. In the preferred embodiment, the respective wing member 107n extend along the length of the respective section, S1-S5.

It may be noted that in a wind turbine rotor blade 104 comprising a plurality of sections, the sections are arranged with its respective wing members 107n arranged generally aligned with the wing members 107n of the neighbouring sections one after another along the longitudinal direction L of the wind turbine rotor blade 104. Moreover, the second plurality of struts 109 of a first section also forms the first plurality of struts 108 of a second section being immediately adjacent the first section as seen in the longitudinal direction L of the wind turbine rotor blade.

This may also be said as providing a set of a plurality of struts at every transition from one section to another section. For instance, if the wind turbine rotor blade is formed of four sections arranged one after the other along the longitudinal direction of the wind turbine rotor blade there will be a first set of a plurality of struts in the transition between the first and second section, a second set of a plurality of struts in the transition between the second and third transition and a third set of a plurality of struts in the transition between the third and fourth section.

It may be noted that at the connection between the inner most section closest to the hub and the hub it is conceivable to use a plurality of struts and it is also conceivable to use a truncated pyramid shaped member 300 (as shown in figure 2) interconnecting the wing members at the end facing the hub and connecting the wind turbine rotor blade to the hub.

At the outer most end of the wind turbine rotor blade it is conceivable to use a plurality of struts and it is also conceivable to use another kind of member, such as a plate or the like, interconnecting the outer ends of the wing members. It may be advantageous to use a single member at the outer most end, the single member having internal rigidity in the plane formed by the ends of the wing members.

The number of struts in the first plurality of struts may be at least equal to, and preferably is equal to, the number of wing members.

The number of struts in the second plurality of struts may be at least equal to, and preferably is equal to, the number of wing members.

By providing a number of struts being at least equal to the number of wing members, it is possible to secure that every wing member is connected to at least two other wing members. It is conceivable to use for instance five or six struts in case there is four wing members. Four struts forming a foursided polygon and one or more struts extending diagonally inside the polygon.

However, in the preferred embodiment there is three wing members and three struts in each of the first and second plurality of struts.

The struts in the first plurality of struts may form a closed polygon, preferably non-self-intersecting closed polygon, with the respective inner ends of the wing members positioned in the corners of the polygon.

The struts in the second plurality of struts may form a closed polygon, preferably non-self-intersecting closed polygon, with the respective outer ends of the wing members positioned in the corners of the polygon.

In the preferred embodiment there is three wing members and three struts in each of the first and second plurality of struts, wherein the struts forma a triangle with the wing members being positioned in the corners of the triangle. In one embodiment, the triangle is an equilateral triangle.

Each section further comprises at least one diagonal frame member 110a-d extending from an inner end 107ni of a first wing member 107n to an outer end 107no of another wing member 107n. As shown in figure 3, there is e.g. one diagonal frame member 110a extending from the inner end 107c2i of the wing member 107c2 to an outer end 107a2o of the wing member 107a2. From the inner end 107a2i there is also a second diagonal frame member 110b extending to the outer end 107b2o. From the inner end 107b2i there are two diagonal frame member 110c, 110d extending to an outer end of the two wing members, namely to the outer end 107a2o and the other end 107c2o, respectively. It may be noted from figure 2, that at a corner, such as corner 107b2i, at which there are one diagonal frame member 110a1 from a first section S1, there may preferably be two diagonal frame members 110a2, 110b2 extending diagonally in the second section S2.

The diagonal frame members 110a-d may be pre-tensioned providing a pulling force between the inner end of the first wing member to the outer end of the other wing member. Preferably the pre-tension is such that there will be a remaining pre-tension in all the diagonal frame members for any deformation up to the dimensioning loads. Thereby the truss-like frame will be securely held together for any load up to the dimensioning load.

As shown in figure 3, the diagonal frame members 110a-d may have an aero dynamical cross-sectional shape. The shape may be designed to minimize any wind resistance. The shape may be designed as an airfoil.

The struts 108, 109 may be configured to resist longitudinal compression along a longitudinal direction of respective strut 108, 109. In figure 3, the longitudinal direction L108ab is indicated for the strut 108ab.

The longitudinal direction of respective strut 108, 109 is essentially extending from the inner end 107ni of a first wing member to the inner end 107ni of another wing member or an outer end 107no of a first wing member to the outer end 107no of another wing member. In practice the actual connection points may be slightly offset the ends 107ni, 107no along the longitudinal direction L of the rotor blade.

This may e.g. be the case when using an interconnecting member 200 interconnecting the wing members 107n of one section with the corresponding wing member 107n of an adjacent section. In such a case the interconnecting member 200 may have connectors 208 for the struts positioned between the outer end of an inner section, such as section S1, and the inner end of an outer section, such as section S2. The longitudinal direction L of the respective strut 108 will in such a case be extending from the connector 208 of one interconnecting member 200 to a connector 208 of another interconnecting member 200. Alternatively, the wing members 107n are designed such that they cover the interconnecting member 200, wherein the struts 108, 109 and the diagonal frame members 110 extend through openings in the air-foil profile of the wing members 107n. In such a case the interface between the wing members 107n may be such that the actual connection points are at the actual interface between the wing members 107n or some or all of the connection points may be slightly offset the interface between the wing members 107n with all the offset connection points in one of the wing members end portion or with the offset connection points distributed with some in an end portion of a wing member of the first section and some in an end portion of a wing member of the second section.

In the preferred embodiment, as e.g. shown in figures 2-5, the wing members extend towards each other and covers almost all parts of the interconnecting member 200, wherein the connectors 208 for the struts 108, 109 are positioned in the interface between the wing members 107n1 of a first section and the wing members 107n2 of a second section.

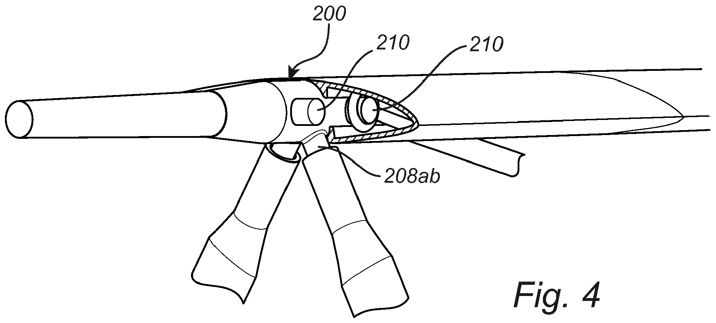

The interconnecting members 200 also comprises connectors 210 for the diagonal frame members 110. In the preferred embodiment, as e.g. shown in figures 2-5, the wing members extend towards each other and covers almost all parts of the interconnecting member 200, with the connectors 210 for the diagonal frame members being positioned inside the profile of the wing members 107n1 (as is best shown in figure 4).

The diagonal frame members extend between one of the interconnecting members at the inner end of a first wing member of a first section to an interconnecting member at the outer end of another wing member of the section.

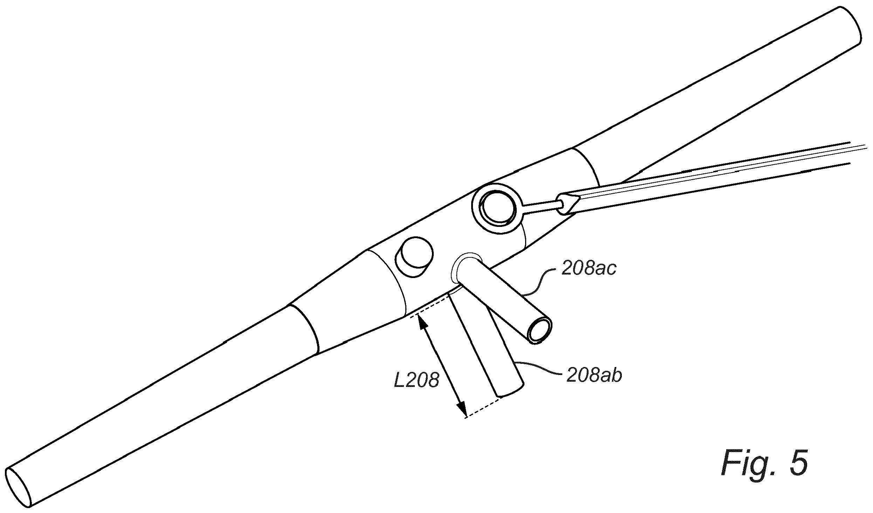

As shown in figures 4 and 5, the struts are separate elongated members being mechanically connected at a first end of the strut to a connector 208 of an interconnecting member of a first wing and being mechanically connected at a second end of the strut to a connector 208 of another interconnecting member of another wing. The connectors 208 are elongated members 208 having a length L208 along the longitudinal direction L108 of the respective strut 108, 109. In the preferred embodiment the connector 208 is a rod configured to be inserted into a bore in the respective strut 108, 109.

As mentioned above and as shown in figures 2-5, the section may further comprise at, at least one end of the respective wing member 107n, an interconnecting member 200 by which the respective wing member 107n is configured to be interconnected with a corresponding wing member 107n of a second section. In the example shown in figure 3, there are three interconnecting members 200 at the first end and three interconnecting members 200 at the second end.

As shown in figure 5, each interconnecting member 200 preferably is provided with connectors 208 for two struts each extending from the respective wing member to two other wing members. There are preferably two connectors 208 at each interconnecting member 200 since the wing members are preferably three and respective wing member is in this case typically connected to two other wing members with one strut to each such wing member. Those two other wing members are in turn preferably interconnected with a third strut.

Each interconnecting member preferably also comprises at least one connector 210 for a diagonal frame member 110 configured to extend in a first section and at least one connector 210 for a second diagonal frame member 110 configured to extend in a second section. It is preferred that at least some of the interconnecting members 200 comprises four connectors 210, of which two connectors 210 are configured to be connected to two diagonal frame members 110 extending in a first section and the other two connectors 210 being configured to be connected to two diagonal frame members 110 extending in the second section.

In figures 4-7, an interconnecting member 200 of a first kind is disclosed.

The interconnecting member 200 is basically formed of an elongate rod or tube 220 configured to extend a significant length along the longitudinal direction L into the respective wing member on either side of the interconnecting member 200. The rod or tube 220 is formed of a composite material, such as a fibre reinforced polymer material, such as carbon or glass fibres in a resin.

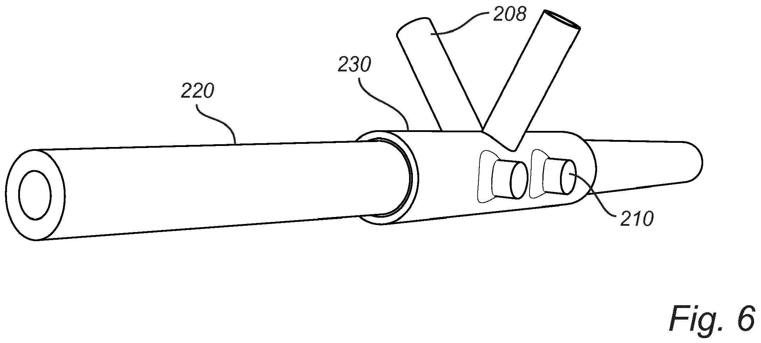

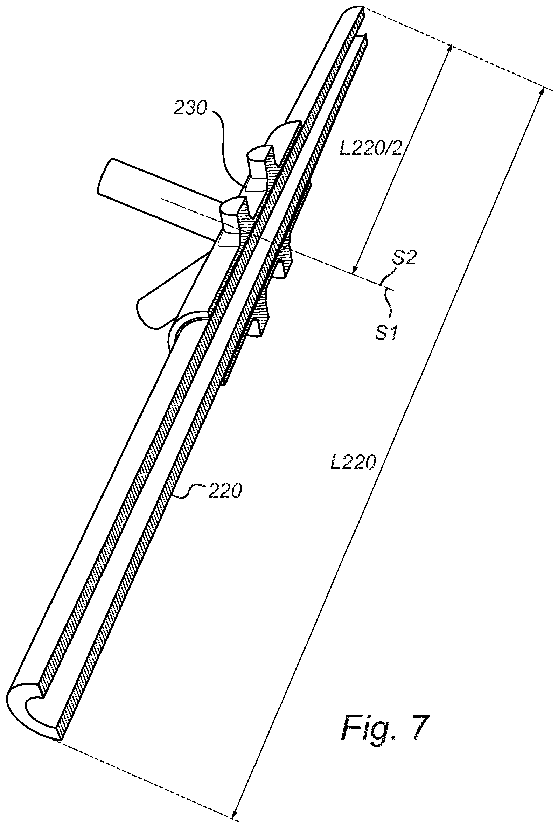

The interconnecting member 200 also comprises an elongated outer tube 230 provided with the connectors 208, 210 for the struts 108, 109 and the diagonal frame members 110. In figures 4 and 5, the connectors 208 are rods and in figures 6 and 7, the connectors 208 are tubes. The struts 108, 109 may be entrained onto the connectors 208 in both cases. However, in the alternative of figures 6 and 7, the struts 108, 109 may have a rod shaped portion configured to be inserted into the tube shaped connectors 208. The outer tube 230 including the connectors 208, 210 is formed of a metal material, preferably an iron-based metal, such as steel. The connectors 210 for the diagonal frame members 110 are formed of short rods. The diagonal frame members 110 are at their respective end provided with a loop configured to grip around the rod 210. It may be noted that in the preferred design, the connectors 208 may transfer torque. It may be noted that in the preferred design the connectors 210 cannot transfer any torque.

The elongate rod or tube 220 may be adhesively connected to the wing members. The outer tube 230 may be adhesively connected to the rod or tube 220. The rod or tube 220 may be divided into two separate sections indicated by the dash-dotted line with the marking S1, S2. In a preferred embodiment, the rod or tube 220 is an integrally formed rod or tube 220 with a first elongate portion being configured to interact with the wing member of the first section and a second elongate portion being configured to interact with the corresponding wing member of the second section. The elongate portions 220 extending along the longitudinal direction L are configured to interact with the wing members 107n over a significant length along the longitudinal direction L. The length of the elongate rod is denoted L220. The elongate portion 220 will interact with a first wing member 107n along half the length L220, i.e. L220/2 as marked in figure 7. This significant length L220/2 is preferably at least half the distance Dab between the wing members 107n along the longitudinal direction L108ab of the struts.

The elongate rod or tube 220 may have the same diameter along the complete length. Alternatively, the elongate rod or tube 220 may have a tapered configuration with a slightly smaller diameter at the ends compared to the diameter at the interface or transition between the sections.

In short it may be said that the interconnecting members 200 will all connect two wing members, two struts and up to four diagonal frame members depending on where the connection is located in the rotor blade. The different struts and diagonal frame members connect as closely as possible to one point in order to avoid unnecessary bending moments.

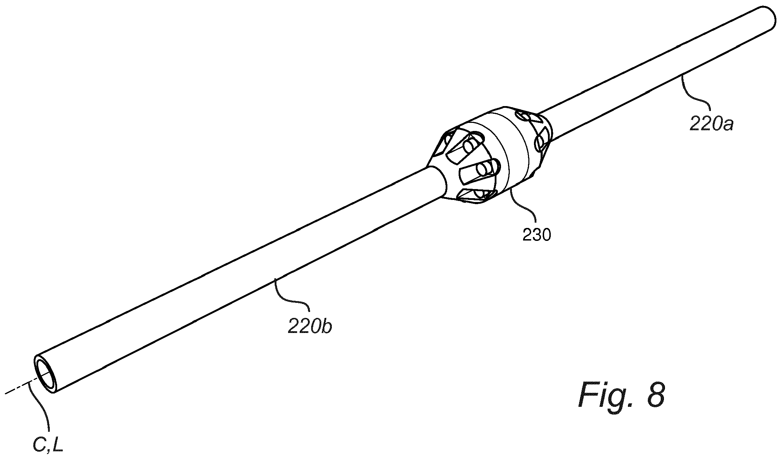

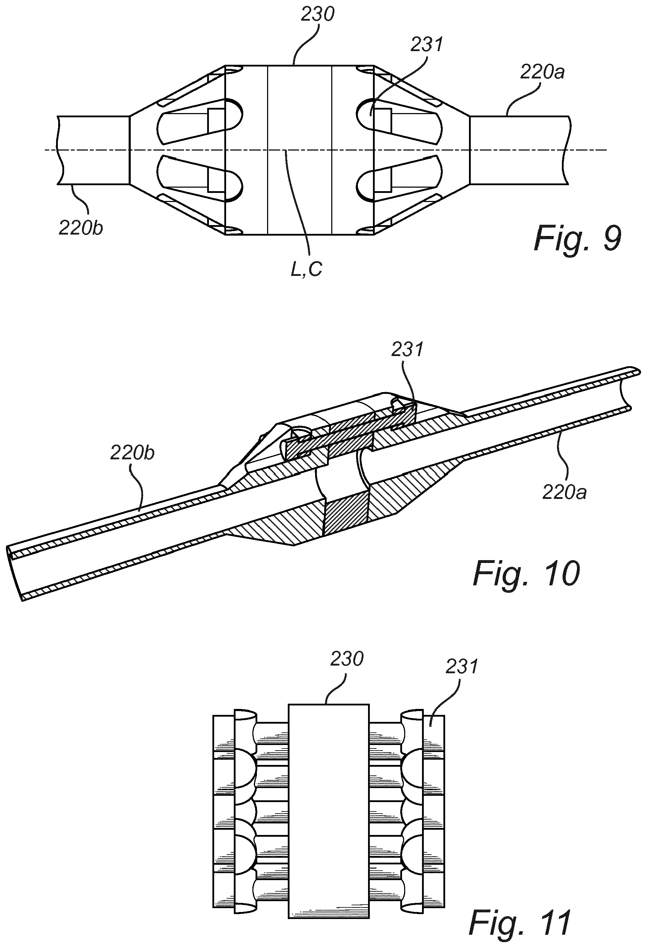

In the following, different embodiments of the interconnecting members will be disclosed with reference to figures 8-13. The disclosure related to the interconnecting members according to figures 1-7 is applicable also for the interconnecting members of figures 8-13 unless specifically expressed otherwise.

For clarity reasons, the connectors 208 and 210 are omitted in the schematic disclosures of figures 8-13.

In figure 8-11, there is shown an embodiment where two elongate portions 220a and 220b are interconnected by a central part 230. The central part 230 is the part that preferably is provided with the connectors 208 and 210. At respective inner end, the elongate portions 220a, 220b are provided with a plurality of bolt openings or recesses distributed around a centre axis C extending along the longitudinal direction L. A plurality of bolts 231 clamps the two elongate portions 220a, 220b and the central part 230 together into an interconnecting member 200. The elongate portions 220a, 220b interact with the wing members 107n as has been discussed above in relation to figures 1-7. The central part 230 is made of metal and the elongate portions 220a, 220b are preferably made of composite material.

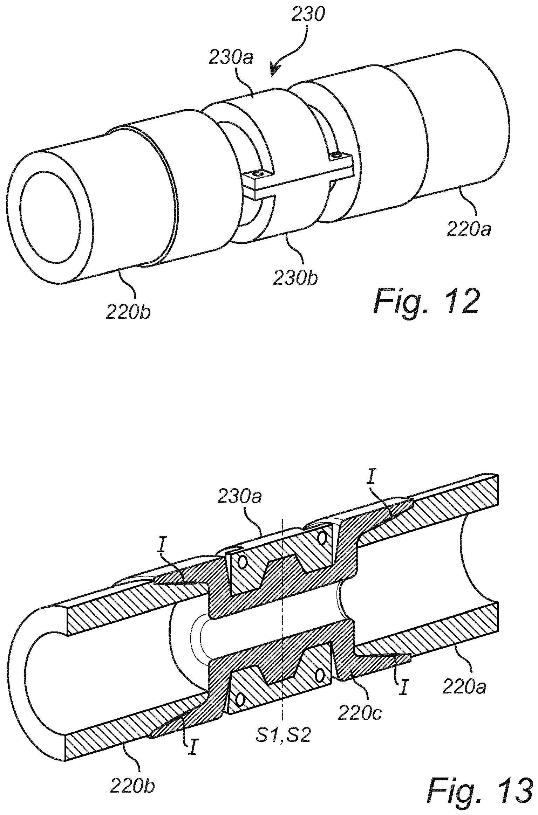

In figures 12-13, there is shown an embodiment where to elongate portions 220a and 220b are interconnected by a central part 220c. It may be noted that for clarity reason, the elongate parts 220a and 220b are depicted significantly shorter than would be the case in an actual embodiment. The interconnection between the respective elongate part 220a, 22b and the central part 220c is an adhesive based connection along the interface I. In the preferred embodiment, the elongate parts 220a, 220b are composite rods or tubes and the central part 220c is a metal socket.

In a first variant of this basic embodiment, the metal socket 220c is provided with the connectors 208 and 210.

In a second variant of the above disclosed basic embodiment, there is provided an additional central part 230. This additional central part 230 may be a steel ring. In the preferred embodiment, the ring 230 is formed of two halves 230a, 230b that are bolted together. In this embodiment, the additional central part 230 will be provided with the connectors 208 and 210. In this variant, the inner central part 220c may also be divided into two halves along the dash-dotted line denoted S1, S2. In such a design, the respective elongate part 220a and 220b (including its associated adhesively connected half of the central part 220c) may be assembled with the respective elongate member 220a, 220b and the respective wing member 107n and then the two wing members 107n may be interconnected by the additional central part 230 clamping together the two halves of the central part 220c. However, in a preferred embodiment, the central part 220c is an integrally formed single piece connected to a first elongate part 220a at one end thereof and connected to a second elongate part 220b at its other end.

The elongate parts 220a and 220b, the central parts 220c and the optional additional central parts 230 forms an interconnecting member 200.

It is contemplated that there are numerous modifications of the embodiments described herein, which are still within the scope of the invention as defined by the appended claims.

The concept of having an additional central part as discussed in relation to the embodiment in figures 12-13, may be applicable also for the embodiments of the interconnecting member shown in figures 1-7 and figures 8-11, respectively.

## Claims

1. A section of a wind turbine rotor blade, the section comprising
three or more wing members extending along each other, at a distance from each other, and along a longitudinal direction of the wind turbine rotor blade,
wherein at least one, and preferably each, wing member has an airfoil shaped cross-section as seen in a plane transverse to the longitudinal extension of the wing member,
wherein each wing member extends from a respective inner end to a respective outer end,
wherein the section further comprises a first plurality of three or more struts and a second plurality of three or more struts,
wherein the struts in the first plurality of struts each extend from an inner end of one wing member to an inner end of another wing member, such that the struts in the first plurality of struts interconnect the wing members at their inner ends, and
wherein the struts in the second plurality of struts each extend from an outer end of one wing member to an outer end of another wing member, such that the struts in the second plurality of struts interconnect the wing members at their outer ends.

2. The section according to claim 1, wherein the section further comprises at least one diagonal frame member extending from an inner end of a first wing member to an outer end of another wing member.

3. The section according to claim 2, wherein the diagonal frame member is pre-tensioned providing a pulling force between the inner end of the first wing member to the outer end of the other wing member.

4. The section according to any one of claims 1-3, wherein the struts are configured to resist longitudinal compression along a longitudinal direction of respective strut.

5. The section according to any one of claims 1-4, wherein each strut of the struts in the first plurality of struts and/or each strut of the struts in the second plurality of struts are separate elongated members being mechanically connected at either end to the respective end of respective wing member.

6. The section according to any one of claims 1-5,
wherein the number of struts in the first plurality of struts is at least equal to, and preferably is equal to, the number of wing members, and/or
wherein the number of struts in the second plurality of struts is at least equal to, and preferably is equal to, the number of wing members.

7. The section according to any one of claims 1-6,
wherein the struts in the first plurality of struts form a closed polygon, preferably non-self-intersecting closed polygon, with the respective inner ends of the wing members positioned in the corners of the polygon, and/or
wherein the struts in the second plurality of struts form a closed polygon, preferably non-self-intersecting closed polygon, with the respective outer ends of the wing members positioned in the corners of the polygon.

8. The section according to any one of claims 1-7, wherein the section further comprises at, at least one end of the respective wing member, an interconnecting member by which the respective wing member is configured to be interconnected with a corresponding wing member of a second section, wherein each interconnecting member preferably is provided with connectors for at least two, preferably for two, struts each extending from the respective wing member to two other wing members.

9. A wind turbine rotor blade comprising a plurality of sections according to any one of claims 1-8,
wherein the sections are arranged with its respective wing members arranged one after another along the longitudinal direction of the wind turbine rotor blade, and
wherein the second plurality of struts of a first section also forms the first plurality of struts of a second section being immediately adjacent the first section as seen in the longitudinal direction of the wind turbine rotor blade.

10. The wind turbine rotor blade according to claim 9, wherein the wing members of the first section are separate from the wing members of the second section.

11. The wind turbine rotor blade according to claim 10, wherein the wing members of the first section have different airfoil properties than the wing members of the second section.

12. The wind turbine rotor blade according to 10 or 11, wherein respective wing member of the first section is interconnected with a corresponding wing member of the second section by an interconnecting member, wherein each interconnecting member is provided with connectors for at least two, preferably for two, struts each extending from the respective wing member to two other wing members.

13. The wind turbine rotor blade according to claim 12, wherein at least one of the interconnecting members at the inner end of a first wing member of a first section further comprises at least one connector for a pre-tensioned diagonal frame member and/or wherein at least one of the interconnecting members at the outer end of another wing member of the section further comprises at least one connector for the pre-tensioned diagonal frame member.

14. An interconnecting members configured to interconnect a wing member of a first section with a corresponding wing member of a second section in a wind turbine rotor blade comprising three or more wing members extending along each other, at a distance from each other, and along a longitudinal direction of the wind turbine rotor blade, wherein the interconnecting member is provided with connectors for at least two, preferably for two, struts each configured to extend from the interconnecting member to another interconnecting member configured to interconnect another wing member of the first section with another corresponding wing member of the second section.

15. The interconnecting member according to claim 14, further comprising:
at least one portion formed of metal provided with connectors, and
a first and a second elongate portion each extending along the longitudinal direction,
wherein the first elongate portion being configured to interact with the wing member of the first section and the second elongate portion being configured to interact with the corresponding wing member of the second section.
